# EUROPÄISCHE PATENTANMELDUNG

(11) **EP 0 856 552 A1**
(43) Veröffentlichungstag der Anmeldung: **05.08.1998**
(21) Anmeldenummer: 97120693.3
(22) Anmeldetag: 26.11.1997
(51) Int. Cl.: C08K 5/00, C08G 18/32

(54) **Polyurethanzusammensetzung mit verbesserter Langzeitresistenz gegen Mikroorganismenbefall**

(30) Priorität: 04.02.1997 DE 19704158
(71) Anmelder: fischerwerke Artur Fischer GmbH & Co. KG, D-72178 Waldachtal (DE)
(72) Erfinder: Arnold, Norbert, Dr., 72178 Waldachtal (DE)

(57) **Zusammenfassung**

Angegeben wird eine Polyurethanzusammensetzung mit verbesserter Langzeitresistenz gegen Mikroorganismenbefall, worin als Hauptbestandteil ein Prepolymer aus einer Polyolkomponente und einer Isocyanatkomponente oder ein durch Aushärten des Prepolymers gebildeter Polyurethanschaum vorliegt. Die Zusammensetzung ist dadurch gekennzeichnet, daß sie 0,1 bis 3 Gew% eines Mikrobizids, bezogen auf die Polyurethanzusammensetzung, enthält.

## Beschreibung

Die Erfindung betrifft Polyurethanzusammensetzungen mit verbesserter Langzeitresistenz gegen Mikroorganismenbefall, worin als Hauptbestandteil ein Prepolymer aus einer Polyolkomponente und einer Isocyanatkomponente oder ein durch Aushärten des Prepolymers gebildeter Polyurethanschaum vorliegt.

Polyurethanzusammensetzungen sind seit langem bekannt. Dies gilt auch für Polyurethanschäume, die beispielsweise für verschiedene Zwecke im Bereich des Hoch- und Tiefbaus eingesetzt werden. Typische Anwendungen für einen Polyurethanschaum im Baubereich sind das Ausfüllen von Hohlräumen an Fenster- und Türrahmen, das Füllen von Hohlräumen in Dachkonstruktionen zur Verbesserung der Wärmedämmung und das Schließen von Mauerdurchbrüchen. Häufig wird der Polyurethanschaum dabei mittels einer Sprühdose auf die gewünschte Stelle aufgebracht. Im Fall eines Einkomponentenschaums enthält die Sprühdose ein Prepolymer, d. h. ein Vorpolymerisat aus einer Polyolkomponente und einer Isocyanatkomponente, in dem noch freie Isocyanatgruppen vorliegen. Ferner umfaßt die Zusammensetzung in der Sprühdose neben üblichen Additiven, wie Schaumstabilisatoren oder Flammschutzmitteln, auch ein Treibgas zum Ausbringen der Zusammensetzung aus der Sprühdose.

Am Einsatzort wird das Prepolymer mittels des Treibgases unter Schaumbildung über einen geeigneten Adapter oder eine sonstige Vorrichtung, zum Beispiel eine Spritzpistole, auf die gewünschte Fläche oder in den zu füllenden Hohlraum gebracht. Anschließend reagieren die freien Isocyanatgruppen des Prepolymers mit der Luftfeuchtigkeit, wodurch der Polyurethanschaum aushärtet. Dieser wird dann häufig verputzt und ist so dauerhaft vor negativen Umwelteinflüssen geschützt.

Es gibt aber auch Fälle, in denen der ausgehärtete Polyurethanschaum nicht mehr von einem weiteren schützenden Baustoff abgedeckt wird, zum Beispiel dann, wenn er Hohlräume im Bereich von Badewannen oder Duschkabinen ausfüllt. Auch bei Dächern werden ausgeschäumte Bereiche oft, beispielsweise aus Kostengründen, nicht durch ein anderes Material abgedeckt. In solchen Fällen ist der Polyurethanschaum unmittelbar den Umwelteinflüssen ausgesetzt. So kann sich auf der Schaumoberfläche atmosphärische Luftfeuchtigkeit in Form von Tau oder Gebäudefeuchtigkeit in Form von Kondenswasser niederschlagen. Das Wasser auf der Schaumoberfläche bildet zusammen mit organischem Material, zum Beispiel mit stets vorhandenen Staubteilchen aus der Luft, eine ideale Grundlage für das Wachstum und die Ausbreitung von Mikroorganismen. Dies äußert sich dann nach einiger Zeit als Verfärbung des Schaums oder als schwarzer Belag hierauf. Die Mikroorganismen beeinträchtigen nicht nur das Aussehen der Schaumoberfläche, sondern bringen auch hygienische und sogar gesundheitliche Risiken mit sich.

Es ist bekannt, in ungeschäumte Fugendichtstoffe Fungizide einzuarbeiten, um auf der Oberfläche solcher Dichtstoffe das Wachstum von Schadpilzen zu verhindern. An sich würde im Laufe der Zeit die Oberfläche eines solchen Fugendichtstoffes durch den ständigen Neuzutritt von Mikroorganismen an Fungizid verarmen. Da aber die gesamte Masse des ungeschäumten Fugendichtstoffes als Fungiziddepot wirkt, aus dem das Fungizid ständig an die Oberfläche nachdiffundiert, ist ein langfristiger fungizider Schutz der Oberfläche dieses Fugendichtstoffes gegeben.

Im Gegensatz dazu ist bei einem Polyurethanschaum von folgenden Überlegungen auszugehen:

Einem solchen Schaum würde auch bei Zugabe eines Fungizids zu dem schaumbildenden Gemisch eine derartige Depotwirkung fehlen. Die Dichte des Polyurethanschaums beträgt nur etwa 15 bis 50 Gramm pro Liter. Das heißt, pro Volumeneinheit hat er einen Feststoffgehalt, der um einen Faktor von 20 bis 60 niedriger ist als bei einem ungeschäumten Fugendichtstoff. Dementsprechend kleiner wäre auch die in dem Polyurethanschaum vorliegende Menge des Fungizids pro Volumeneinheit. Folglich könnte der Polyurethanschaum auch nicht als Fungiziddepot wirken wie die dichte Masse eines ungeschäumten Fugendichtstoffes. Ein Verbrauch des Fungizids an der Oberfläche des Polyurethanschaums könnte deshalb durch ein Nachdiffundieren der entsprechenden Fungizidmenge aus dem Schauminneren nicht mehr ausgeglichen werden.

Hinzu kommt, daß - im Gegensatz zum ungeschäumten Fugendichtstoff - beim Polyurethanschaum die Diffusion von Stoffen aus dem Inneren an die Oberfläche erheblich reduziert wäre. Wegen der zahlreichen Gaseinschlüsse im Schaum bestehen nur noch schmale Feststoffbrücken, über die das Fungizid diffundieren könnte, wodurch eine ausreichende Diffusion verhindert würde. Außerdem müßte das Fungizid beim Schaum, im Gegensatz zum ungeschäumten Fugendichtstoff, einen längeren Diffusionsweg aus dem Schauminneren an dessen Oberfläche zurücklegen, weil auf diesem Weg unzählige Gaseinschlüsse umgangen werden müssen.

Ferner wäre zu befürchten, daß der Zusatz eines Fungizids oder ähnlicher Wirkstoffe die Bildung eines Schaums aus dem Polyurethan-Prepolymer beeinträchtigt, da bekanntlich bei schäumenden Systemen der Zusatz weiterer Stoffe häufig zu verringerten Schaumausbeuten oder schlechteren Schaumstrukturen führt.

Aus den vorstehenden Gründen war zu erwarten, daß die Anwesenheit eines Fungizids oder eines ähnlichen Wirkstoffs in üblicher Menge in einem Polyurethanschaum nicht den beabsichtigten Erfolg bringt.

Der Erfindung liegt daher die Aufgabe zugrunde, eine Polyurethanzusammensetzung anzugeben, bei der sichergestellt ist, daß sie in Form eines ausgehärteten Schaums gegen den Befall durch Mikroorganismen langfristig resistent ist.

Überraschenderweise wurde nun gefunden, daß diese Aufgabe trotz der vorgenannten Hindernisse dadurch gelöst wird, daß in die Polyurethanzusammensetzung ein Mikrobizid in einer Menge von 0,1 bis 3 Gew%, vorzugsweise in einer Menge von 0,1 bis 2 Gew%, insbesondere in einer Menge von 0,2 bis 1 Gew%, jeweils bezogen auf die Polyurethanzusammensetzung, eingearbeitet wird.

Es ist dabei besonders überraschend, daß für die Polyurethanzusammensetzung eine Mikrobizidmenge ausreicht, die in der gleichen Größenordnung liegt wie die Menge von Fungiziden in bekannten ungeschäumten Fugendichtstoffen.

Die Polyurethanzusammensetzung enthält als Mikrobizide vorzugsweise ein Fungizid, Bakterizid oder Algizid. Diese können jeweils allein oder in einer Kombination aus mehreren Mikrobiziden verwendet werden.

Bevorzugte Mikrobizide sind Verbindungen aus der Gruppe der Benzimidazole, Chinoxaline, Imidazole, Triazole, Pyridine, Pyrimidine, Triazine, Phosphorsäureester, Tetrahydro-1,3,5-thiadiazinthione, Isothiacyanate, Thiocyanate und Isothiazoline, insbesondere der Pyridine und der Isothiazoline. Speziell bevorzugte Mikrobizide sind N-Octyl-4-isothiazolin-3-on, 4,5-Dichlor-2-n-octyl-4-isothiazolin-3-on, 2,3,5,6-Tetrachlor-4-methylsulfonylpyridin und/oder ein Gemisch aus je 50 Gew% 1,2-Benzisothiazolin-3-on und Bis(1-hydroxy)-2H-pyridinthionato-o,s-(T-4)-Zink. Die Mikrobizide sind im Handel erhältlich (z. B. unter der Handelsbezeichnung "Kathon" der Fa. Rohm and Haas Deutschland GmbH, oder unter der Handelsbezeichnung "Densil" der Fa. Zeneca).

Die Mikrobizide können als solche oder in Kombination mit Lösungsmitteln, vorzugsweise mit unpolaren Lösungsmitteln, in die Polyurethanzusammensetzung eingearbeitet werden. Das Gemisch aus Lösungsmittel und Mikrobizid enthält das letztere vorzugsweise in einer Menge von 5 bis 50 Gew%, insbesondere in einer Menge von 5 bis 20 Gew%.

Als Lösungsmittel in Kombination mit dem Mikrobizid dienen vorzugsweise unverzweigte oder verzweigte gesättigte Kohlenwasserstoffe, aromatische Kohlenwasserstoffe, heterocyclische Verbindungen, Fluoralkane und perfluorierte Alkylether. Insbesondere sind als Lösungsmittel Xylol und Methyl-t-butylether bevorzugt. Diese Lösungsmittel können jeweils allein oder als Gemisch aus mehreren Lösungsmitteln verwendet werden.

Das Polyurethanprepolymer und der daraus zu erhaltende Polyurethanschaum können in üblicher Weise hergestellt werden. Beispielsweise mischt man 30 bis 60 Gew.-teile eines entsprechenden Polyols, z. B. eines kurzkettigen Polyetherpolyols, mit 30 bis 60 Gew.-teilen eines geeigneten Isocyanats, z. B. mit Methylendiphenyldiisocyanat. Man erhält dabei ein Prepolymer mit einem Überschuß an Isocyanatgruppen von 3 bis 25 Mol%, bezogen auf die Hydroxylgruppen. Das Mischen kann in einer Sprühdose erfolgen, in die anschließend noch ein Treibgas, z. B. Propan, Butan, Tetrafluorethan (R 134), Difluorethan (R 152) oder 1,1,1-Trifluorethan (R 143) oder ein Gemisch aus solchen Gasen, eingebracht wird. Zur gleichmäßigen Vermischung von Prepolymer und Treibgas wird deren Gemisch etwa 10 bis 30 s geschüttelt.

Die Beispiele erläutern die Erfindung.

### Beispiel 1

Es wurde ein erfindungsgemäßes mikrobizidhaltiges Prepolymer aus 193 Gew.-teilen eines kurzkettigen Polyols und 257 Gew.-teilen Methylendiphenyldiisocyanat hergestellt. Dazu wurden die Polyolkomponente und die Isocyanatkomponente in eine Sprühdose eingefüllt und mit 2 Gew%, bezogen auf das Prepolymer, 4,5-Dichlor-2-n-octyl-4-isothiazolin-3-on als Mikrobizid gemischt. Das Mikrobizid wurde in Form einer Lösung in Xylol (Gewichtsverhältnis 1:2) zugegeben.

Das Gemisch wurde dann noch mit 75 Gew.-teilen, bezogen auf das Prepolymer, eines Treibgases aus Propan, Butan, Tetrafluorethan (R 134), 1,1,1-Trifluorethan (R 143) und Difluorethan (R 152) versetzt und 20 s lang geschüttelt. Anschließend ließ man das in der Sprühdose gebildete Prepolymer aus der Sprühdose austreten und den dabei gebildeten Polyurethanschaum 8 h an der Luft aushärten.

### Beispiel 2

Gemäß Beispiel 1 wurde ein Prepolymer hergestellt, jedoch mit dem Unterschied, daß anstelle von 2 Gew% jetzt 0,33 Gew% des Mikrobizids eingesetzt wurden.

### Vergleichsbeispiel

Gemäß Beispiel 1 wurde ein Polyurethanschaum hergestellt, jedoch ohne Zusatz eines Mikrobizids.

Von den in den Beispielen und dem Vergleichsbeispiel erhaltenen ausgehärteten Schäumen wurden jeweils drei Proben entnommen und entsprechend der Prüfmethode ISO 846 - 1978, Verfahren B, auf ihre Resistenz gegen Mikroorganismenbefall untersucht. Dabei wurde ein Gemisch aus den folgenden Mikroorganismen eingesetzt:
- Aspergillus niger: ATCC 6275
- Penicilium funiculosum: IMI 114933
- Paecilomyces variotil: ATCC 10121
- Trichoderma viride: ATCC 9645
- Chaetomium globosum: ATCC 6205
- Alternaria alternata: IP 1863-89

Die Schaumproben wurden im Rahmen der Prüfmethode 4 Wochen bei einer Temperatur von etwa 29°C und einer relativen Luftfeuchtigkeit von über 90 % gelagert. Bei der anschließenden Untersuchung auf Mikroorganismenbefall wurde folgender Bewertungsmaßstab angewandt:
- 0 =: Kein Wachstum von Mikroorganismen unter dem Mikroskop bei 50-facher Vergrößerung erkennbar.
- 1 =: Wachstum von Mikroorganismen mit dem bloßen Auge nicht oder kaum erkennbar, aber unter dem Mikroskop bei 50-facher Vergrößerung erkennbar.
- 2 =: leichtes Wachstum von Mikroorganismen, die weniger als 25 % der Probenoberfläche bedecken.

Die Ergebnisse der Untersuchung sind in der nachfolgenden Tabelle zusammengefaßt.

**Tabelle**

| Beispiel oder Vergleichsbeibeispiel | Probe Nr. | Mikrobizidmenge, bezogen auf Prepolymer % | Bewertung des Mikroorganismenwachstums |
|---|---|---|---|
| Beispiel 1 | 1 | 2 | 0 |
| | 2 | 2 | 0 |
| | 3 | 2 | 0 |
| Beispiel 2 | 1 | 0,33 | 1 |
| | 2 | 0,33 | 1 |
| | 3 | 0,33 | 1 |
| Vergleichsbeispiel | 1 | 0 | 2 |
| | 2 | 0 | 2 |
| | 3 | 0 | 2 |

Aus der Tabelle ist ersichtlich, daß bei den Polyurethanschäumen mit einem Gehalt an Mikrobizid kein oder nur ein sehr geringes Wachstum von Mikroorganismen auftrat, im Gegensatz zu dem Schaum ohne Mikrobizid.

## Patentansprüche

1. Polyurethanzusammensetzung mit verbesserter Langzeitresistenz gegen Mikroorganismenbefall, worin als Hauptbestandteil ein Prepolymer aus einer Polyolkomponente und einer Isocyanatkomponente oder ein durch Aushärten des Prepolymers gebildeter Polyurethanschaum vorliegt, dadurch gekennzeichnet, daß die Polyurethanzusammensetzung 0,1 bis 3 Gew% eines Mikrobizids, bezogen auf die Polyurethanzusammensetzung, enthält.

2. Polyurethanzusammensetzung nach Anspruch 1, dadurch gekennzeichnet, daß sie 0,1 bis 2,0 Gew% des Mikrobizids, bezogen auf die Polyurethanzusammensetzung, enthält.

3. Polyurethanzusammensetzung nach Anspruch 1 oder 2, dadurch gekennzeichnet, daß sie als Mikrobizid ein Fungizid, Bakterizid oder Algizid enthält.

4. Polyurethanzusammensetzung nach einem der Ansprüche 1 bis 3, dadurch gekennzeichnet, daß sie als Mikrobizid N-Octyl-4-isothiazolin-3-on, 4,5-Dichlor-2-n-octyl-4-isothiazolin-3-on, 2,3,5,6-Tetrachlor-4-methylsulfonylpyridin und/oder ein Gemisch aus je 50 Gew% 1,2-Benzisothiazolin-3-on und Bis(1-hydroxy)-2H-pyridinthionato-o,s-(T-4)-Zink enthält.

5. Polyurethanzusammensetzung nach einem der Ansprüche 1 bis 4, dadurch gekennzeichnet, daß in dem Prepolymer das Mikrobizid zusammen mit einem unpolaren Lösungsmittel vorliegt.

6. Polyurethanzusammensetzung nach Anspruch 5, dadurch gekennzeichnet, daß das Prepolymer als unpolares Lösungsmittel mindestens einen der Stoffe enthält, die zu den unverzweigten oder verzweigten gesättigten Kohlenwasserstoffen, aromatischen Kohlenwasserstoffen, heterocyclischen Verbindungen, Fluoralkanen und perfluorierten Alkylethern gehören.
